# EUROPEAN PATENT APPLICATION

(11) **EP 1 728 627 A1**
(43) Date of publication of application: **06.12.2006**
(21) Application number: 06251464.1
(22) Date of filing: 20.03.2006
(51) Int. Cl.: B32B 37/00, B32B 37/18, B32B 37/12

(54) **Lenticular laminating machine**

(30) Priority: 27.05.2005 CN 200520108472
(71) Applicant: LPI Technology International Limited, Kowloon (HK)
(72) Inventor: Law, Chi Yin, 13th Floor, Englong Commercial Bldg., Kowloon (HK)
(74) Representative: Wombwell, Francis

(57) **Abstract**

A lenticular laminating machine having a base, a working platform and a plurality of rollers, the plurality of rollers comprise laminating rollers (1,2), a printing paper roller (3), lenticular sheet rollers (4,5) and a mucilage adjusting roller (6); the outlet of the lenticular sheet rollers (4,5) is aligned to the inlet of the laminating rollers (1,2). The spacing of the laminating rollers (1,2), the lenticular sheet rollers (4,5), the printing paper roller (3) the lower laminating roller (2) and the spacing of the mucilage adjusting roller (6) as well as the lower lenticular sheet roller (5) are adjustable. The present laminating machine can synchronize the forwarding of the lenticular sheet and the printing paper, and also can adjust the spacing of the lenticular sheet rollers (4,5) and thus the thickness of the laminated lenticular sheet and the printing paper, to ensure laminating precision of the lenticular sheet and the printing paper is about +0.0001 mm. The present machine is easy to operate, easy to control the amount of the mucilage, increases the level of production capacity and the high grade products of the 3D pictures, and decreases the cost of manufacture.

## Description

This invention relates to a device for manufacturing 3D pictures, more particularly, it is relates to a lenticular laminating machine.

At present, there are two ways to manufacture lenticular 3D pictures, the first is by direct printing, that is, printing the lenticular 3D pictures directly onto the rear of a lenticular sheet; the other is by laminating, which involves first printing the lenticular 3D pictures on paper, then laminating the paper on a lenticular sheet.

Direct printing requires precision control of the printing on the lenticular sheet to about ±0.0001 mm to obtain suitable products, but most manufacturers cannot achieve this defined limitation and the product inferior rate is up to 20-30%, thus the cost of manufacture is high and the lenticular sheet will become useless after printing.

Comparing with direct printing, laminating has higher precision since the angle between the lenticular sheet and the printing paper is adjustable after lamination, and the lenticular sheet can be reused even if the laminated product is unsuitable. But the structure of prior art lenticular laminating machines is very simple. There are only two adjacent parallel rollers revolving correspondingly, when laminating, putting the printed paper onto the bottom paper and coating with mucilage first, then putting the lenticular sheet on the printing paper; after laminating by the roller of the laminating machine, then adjusting the angle between the lenticular sheet and the printing paper to obtain the final product. But this machine is very slow in production and produces excessive wastage of mucilage and thus increases the cost.

The object of the present invention is to provide a lenticular laminating machine to overcome the defects of slow in production, excessive wastage of mucilage and high cost of manufacture in the prior art by balancing the printing paper and the lenticular sheet and adjusting the thickness of the mucilage.

The techniques in the present invention to solve the defects provide a lenticular laminating machine comprising a base, a working platform, a pair of counter-rotating parallel rollers comprising an upper laminating roller (1) and a lower laminating roller (2), a roller supporting device on both sides of the rollers, a roller transmitting device and a motor housed inside the base; wherein the machine further comprises a printing paper roller (3) under the lower laminating roller (2) and parallel and counter-rotating with the lower roller (2); an upper lenticular sheet roller (4) and a lower lenticular sheet roller (5) that are symmetrically positioned with respect to the upper laminating roller (1) and lower laminating roller (2), the outlet of the upper and lower lenticular sheet rollers (4, 5) being aligned to the inlet of the upper and lower laminating rollers (1, 2); a mucilage adjusting roller (6) mounted parallel and counter-rotating with the lower lenticular sheet roller (5); a mucilage container (7) that receives the mucilage adjusting roller (6); a printing orientating lug (8) is located in the region between the lower laminating roller (2) and the outlet of the lower laminating roller (2) and the printing paper roller (3), the contact surface of the printing orientating lug (8) being arcuate, thus to guide the printing paper together with the roller (2) to enter into the inlet of the upper and lower laminating roller (1, 2); the working platform including a front platform and a rear platform, the front platform aligned to the inlet of the lower laminating roller (2) and the printing paper roller (3), and the rear platform is aligned to the inlet of the upper lenticular sheet roller (4) and the lower lenticular sheet roller (5).

Preferably, an infrared sensor (9) and a reflector (10) are respectively located on the both sides of the outlet of the upper lenticular sheet roller (4) and the lower lenticular sheet roller (5).

Preferably, the infrared sensor (9) and the reflector (10) are respectively set on the upper side and the lower side of the revolving outlet of the upper lenticular sheet roller (4) and the lower lenticular sheet roller (5); and the spacing between the upper and lower laminating rollers (1, 2) are adjustable.

Further preferably, a portion of the cylinder of the mucilage adjusting roller (6) dips into the mucilage (71) of the mucilage container (7), and the spacing between the mucilage adjusting roller (6) and the lower lenticular sheet roller (5) is adjustable.

Further, the spacing between the upper lenticular sheet roller (4) and the lower lenticular sheet roller (5) is preferably adjustable; the spacing between the lower laminating roller (2) and the printing paper roller (3) are also preferably adjustable.

In the said lenticular laminating machine, a lenticular sheet balance controller is preferably located on one side of the rear platform, the orientation panel of the lenticular sheet on the controller conforms to the direction of travel of the lenticular sheet.

In the said lenticular laminating machine, a paper balance controller is preferably located on one side of the front platform; the orientation panel of the paper on the controller conforming to the direction of the paper.

In the said lenticular laminating machine, a front and rear paper-in infrared controller is preferably located on one end of the printing paper roller (3), and to control the front and rear position of the paper when it enters into the roller by adjusting the lower laminating roller (2) and the printing paper roller (3).

In the said lenticular laminating machine, an adjustment indicating device suitably connects with the mucilage adjusting roller (6), the upper lenticular sheet roller (4) and the printing paper roller (3), the adjustment indicating device including a mucilage adjusting button, a lenticular sheet adjusting knob and a printing paper adjusting knob.

In the said lenticular laminating machine, a control box is set on the base of the machine, the box comprising a power switch, a printing paper length control display, a printing paper number display, a printing paper front and rear control display.

The advantages of the present invention are:
1. The laminating precision is ensured to +0.0001 mm by adjusting the thickness of the laminated lenticular sheet printing paper, the lenticular sheet, and the printing paper, and by controlling the synchronization between the lenticular sheet and the printing paper, thus increased the ratio of the high quality products;
2. It is easy to operate, and the produce speed is fast, increased the productivity;
3. The mucilage is equally coated, and the amount of the mucilage is adjustable, therefore saved the dosage of the mucilage.
4. Decreased the cost of manufacture.

### Brief Description of the Drawings

Fig. 1 is a perspective view of the lenticular laminating machine of the present invention.
Fig. 2 is the roller disposal and working principium diagram.
Fig. 3 shows the laminating function of the lenticular laminating machine.
Fig. 4 illustrates an infrared sensor.
Fig. 5 illustrates an infrared sensor reflector.
Fig. 6 illustrates an example of the panel of the control box.
Fig. 7 illustrates an example of the panel of the infrared, front and rear, paper adjuster.
Fig. 8 illustrates an example of the adjusting indicating device.'
Fig. 9 illustrates an example of the transmitting device.

### Detailed Description

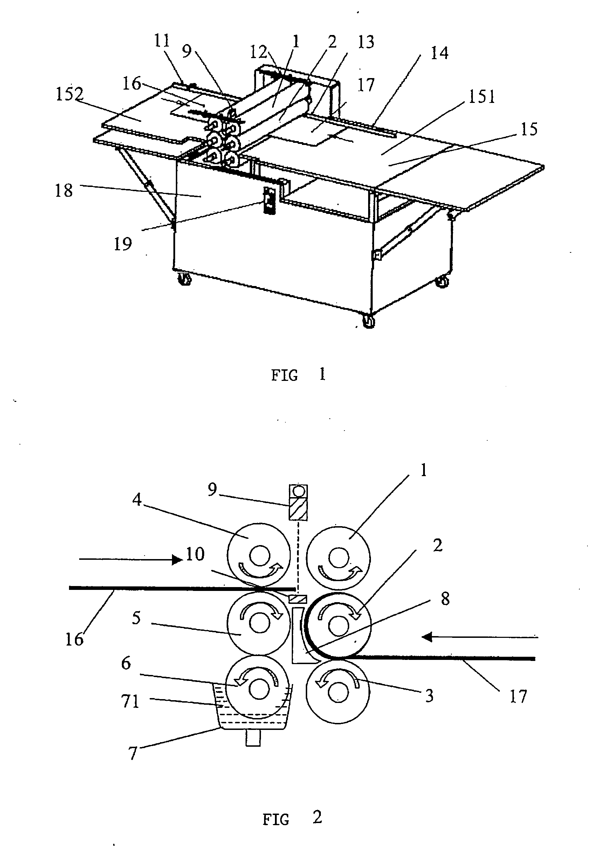

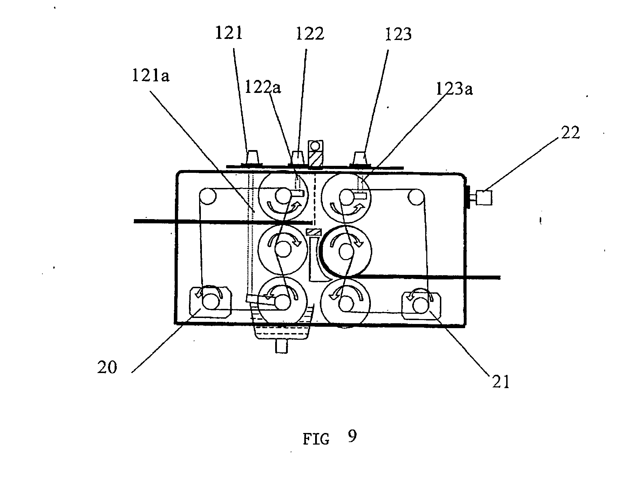

As shown in Fig. 1, an adjustment indicating device 12 is located on the both sides of the roller and connected to a mucilage adjusting roller 6, an upper lenticular sheet roller 4 and a printing paper roller 3; as shown in Fig. 9. The adjustment indicating device 12 includes a mucilage adjusting button 121, a lenticular sheet adjusting knob 122 and a printing paper adjusting knob 123.

As shown in Fig. 1, the lenticular laminating machine in the present invention comprising a base 18; a working platform 15, which includes a front platform 151 and a rear platform 152; a pair of counter-rotating, parallel rollers, that comprise an upper laminating roller I and a lower laminating roller 2, the two rollers towards the right, and the neighboring parts of the rollers formed an inlet and an outlet; a roller supporting device on both sides of the rollers, a roller transmitting device and a motor (not shown in the Fig.) housed inside the base. The distance between the upper laminating roller 1 and the lower laminating roller 2 is adjustable according to the thickness of the laminated lenticular sheet and the printing paper. It can be adjusted by turning the printing paper adjusting knob 123 to drive the connecting pole 123a to raise or lower the roller 1 thereby adjusting the space between roller 1 and roller 2.

A printing paper roller 3 is mounted parallel to and under the lower laminating roller 2 and counter-rotates with the lower roller, the spacing between these two rollers can be adjusted therefore to adjust to the thickness of the printing paper; the neighboring parts of the rollers formed an inlet and outlet, the front platform 151 aligns with the inlet.

A printing orientating lug 8 is located on the neighboring area between the lower laminating roller 2 and the outlet of the lower laminating roller 2 and the printing paper roller 3, the surface of the printing orientating lug 8 adjacent the lower laminating roller 2 is arcuate in shape, thus to guide the printing paper over the roller 2, to enter into the inlet of the upper and lower laminating rollers 1 and 2. On the inlet side of the upper and lower laminating rollers 1 and 2, an upper lenticular sheet roller 4 and a lower lenticular sheet roller 5 are set symmetrically, the outlet of the two rollers aligns with the inlet of the upper and lower laminating rollers 1 and 2. The spacing between the upper and lower lenticular sheet rollers 4 and 5 can be adjusted to alter the thickness of the lenticular sheet, by turning the lenticular sheet adjusting knob 122 to drive the connecting pole 122a to raise or lower the roller 4 to adjust the space between roller 4 and roller 5. The rear platform 152 is associated and aligned with the inlet of the upper and lower lenticular sheet rollers 4 and 5.

A mucilage adjusting roller 6 and a mucilage container 7 are positioned under the lower lenticular sheet roller 5. The mucilage adjusting roller 6 is parallel with roller 5, and counter-rotates with respect thereto. Part of the mucilage adjusting roller 6 dips into the mucilage 71 in the mucilage container 7 so that mucilage will adhere to the mucilage adjusting roller 6 when it is revolving, and the mucilage will transfer to the lower lenticular sheet roller 5, when the adjusting roller 6 engages with the roller 5. The spacing between the lower lenticular sheet roller 5 and the mucilage adjusting roller 6 can be adjusted by turning the mucilage adjusting button 121 to drive the connecting pole 121 a to raise or lower the roller 6, thereby adjusting the space between roller 5 and roller 6. By adjusting the spacing, the amount of the mucilage can be adjusted to a suitable level to ensure the laminating quality and save the dosage of mucilage.
Other than the arrangement of the mucilage adjusting roller 6 and the mucilage container 7 in the above embodiment, the mucilage adjusting roller 6 can be set alongside the lower lenticular sheet roller 5 also, so that the mucilage can be coated on the lower lenticular sheet roller 5, when the adjusting roller 6 is running with the roller 5. Moreover, other structures and assemblies are also acceptable, such as a mucilage container 7 with an auto-coating device along the axial direction of the mucilage adjusting roller 6 to coat nearby the inlets of the lower lenticular sheet roller 5 and the mucilage adjusting roller 6, so that the mucilage can be coated evenly by the engagement of the mucilage adjusting roller 6 and the mucilage container 7.

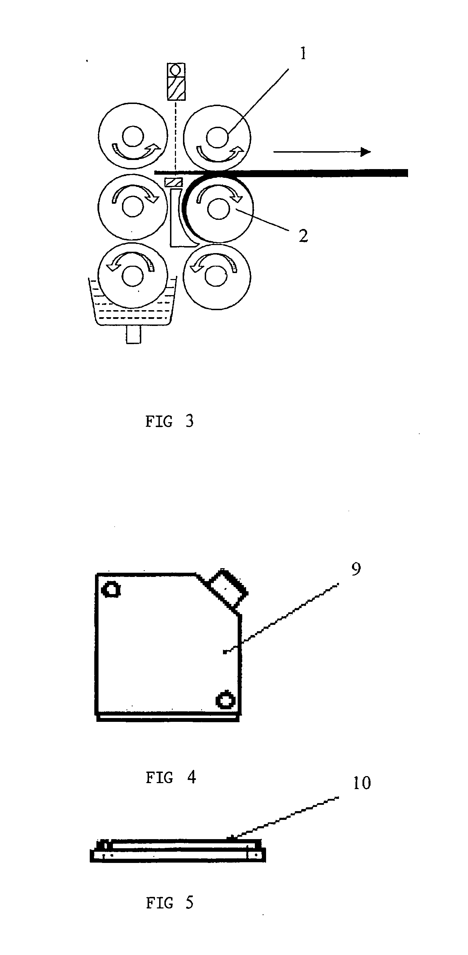

An infrared sensor 9 is set on the upper side of the outlet of the upper and lower lenticular sheet rollers 4 and 5, and a reflector 10 is set on the lower side. Alternatively, the infrared sensor 9 can be on the lower side and the reflector 10 on the upper side. The infrared sensor 9 can detect the arrival of lenticular sheet 16 to enable control of the synchronization between the lenticular sheet 16 and the printing paper 17. The controlling method is determined by lenticular sheet 16 entering the space between the upper roller 4 and the lower roller 5, so that the lenticular sheet 16 prevents the infrared ray transmitting to the reflector 10, sending a signal to control box 19 which controls the lenticular sheet motor 20 and printing paper motor 21 to advance synchronously thus to laminate. Fig. 4 and 5 illustrate an example of the infrared sensor 9 and the reflector 10.

As Fig. 1 shows, a lenticular sheet balance controller 11 and paper balance controller 14 are set on the front platform 151 and rear platform 152 along one side of the forward direction of the lenticular sheet 16 and the printing paper 17. The orientation panels of the controllers are to confirm to the ongoing direction of the lenticular sheet and the printing paper to ensure the precise orientation of the lenticular sheet and the printing paper.

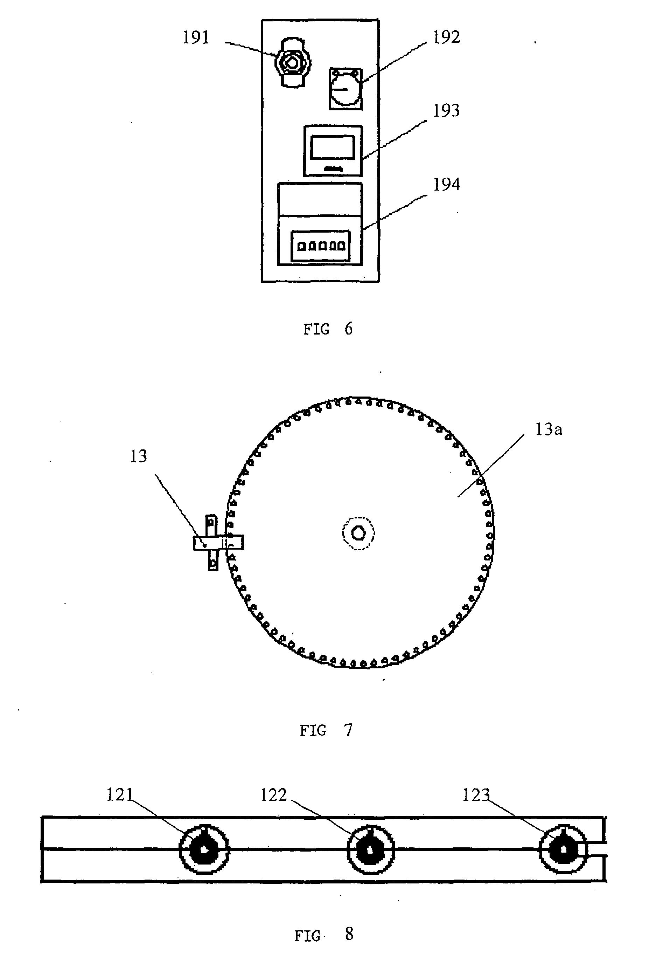

As Fig. 1 further shows, a front and rear paper infrared controller 13 is located on one end of the printing paper roller 3. Fig. 7 illustrates an exemplary panel of the infrared front and rear paper adjuster. The control method is: insert the printing paper 17 into the space between the lower laminating roller 2 and the printing paper roller 3, press the button 22 (as in Fig. 9) to start the printing paper motor 21 and the printing paper is taken into the roller, then the front and rear paper infrared controller 13 reads a signal coming through the panel 13a, and stops on the predetermined number of the hole be read to control the front and rear position of printing paper which is fed in steps into the roller. The infrared control board turns synchronously with the laminating roller 2, and controls the length of the paper.

As Fig. 1 shows, a control box 19 is located on the base 18, whilst the power switch 191, printing paper length control display 192, printing paper number display 193 and printing paper front and rear display 794 are located on the panel of the control box.

The method of using the lenticular laminating machine is:
Insert the printed printing paper on the front platform with the picture side facing downwards, orientating the paper by the paper balance controller on one side of the platform, the paper should touch the printing paper inlet;
Insert the lenticular sheet on the rear platform, orientating the sheet by the lenticular sheet balance controller on one side of the platform, the front edge of the lenticular sheet should touch the lenticular roller inlet;
Adjust the balance data of the lenticular sheet and the printing paper by the following method: as a proofread line has been printed on the picture, when the lenticular sheet is laminated with the picture, checking the proofread line to see if it has changed as a black line, or a white line, which indicates the correctness of lamination, the proofread line will be seen as black and white stria, if the laminating is incorrect, then relaxing one bolt of the paper balance controller 14, and adjusting the angle of the controller 14 to make the proofread line be seen as black or white stria, thus finished the adjustment;
Debug the thickness data of the lenticular sheet, printing paper and the laminated lenticular sheet and printing paper, by adjusting the spacing between the upper and lower lenticular sheet rollers 4 and 5, and adjusting the spacing between the upper and lower laminating rollers 1 and 2;
Adjust the spacing between the mucilage adjusting roller and the lower lenticular sheet roller to obtain satisfactory dosage of the mucilage;
Set the lenticular sheet and printing paper to laminate according to the above debugged data to obtain a satisfactory lenticular 3D picture.

The advantages of the present invention are:
1. Laminating precision is ensured to +0.0001 mm by adjusting the thickness of the laminated lenticular sheet printing paper, the lenticular sheet, and the printing paper, and by controlling the synchronization between the lenticular sheet and the printing paper, thus increasing the ratio of high quality products;
2. It is easy to operate, and the production speed is fast, increasing productivity;
3. The mucilage is evenly coated, and the amount of the mucilage is adjustable, therefore saving the dosage of the mucilage.
4. Decreased cost of manufacture.

## Claims

1. A lenticular laminating machine comprising a base, a working platform, a pair of counter-rotating parallel rollers comprising an upper laminating roller (1) and a lower laminating roller (2), a roller supporting device on both sides of the rollers, a roller transmitting device and a motor housed inside the base; wherein the machine further comprises a printing paper roller (3) under the lower laminating roller (2) and parallel and counter-rotating with the lower roller (2); an upper lenticular sheet roller (4) and a lower lenticular sheet roller (5) that are symmetrically positioned with respect to the upper laminating roller (1) and lower laminating roller (2), the outlet of the upper and lower lenticular sheet rollers (4, 5) being aligned to the inlet of the upper and lower laminating rollers (1, 2); a mucilage adjusting roller (6) mounted parallel and counter-rotating with the lower lenticular sheet roller (5); a mucilage container (7) that receives the mucilage adjusting roller (6); a printing orientating lug (8) is located in the region between the lower laminating roller (2) and the outlet of the lower laminating roller (2) and the printing paper roller (3), the contact surface of the printing orientating lug (8) being arcuate, thus to guide the printing paper together with the roller (2) to enter into the inlet of the upper and lower laminating roller (1, 2); the working platform including a front platform and a rear platform, the front platform aligned to the inlet of the lower laminating roller (2) and the printing paper roller (3), and the rear platform is aligned to the inlet of the upper lenticular sheet roller (4) and the lower lenticular sheet roller (5).

2. The lenticular laminating machine as in claim 1, wherein an infrared sensor (9) and a reflector (10) are respectively set on opposite sides of the outlet of the upper lenticular sheet roller (4) and the lower lenticular sheet roller (5).

3. The lenticular laminating machine as in claim 2, wherein said infrared sensor (9) and reflector (10) are respectively set on the upper side and the lower side of the outlet of the upper lenticular sheet roller (4) and the lower lenticular sheet roller (5); and the spacing between the upper and lower laminating roller (1, 2) are adjustable.

4. The lenticular laminating machine as in claim 3, wherein a portion of the cylinder of the mucilage adjusting roller (6) dips into the mucilage (71) in the mucilage container (7), and the spacing between the mucilage adjusting roller (6) and the lower lenticular sheet roller (5) is adjustable.

5. The lenticular laminating machine as in claim 4, wherein the spacing between the upper lenticular sheet roller (4) and the lower lenticular sheet roller (5) is adjustable; the spacing between the lower laminating roller (2) and the printing paper roller (3) is adjustable.

6. The lenticular laminating machine as in any one of claims 1 to 5, wherein a lenticular sheet balance controller is located on one side of the rear platform, the orientation panel of the lenticular sheet on the controller conforms to the direction of travel of the lenticular sheet.

7. The lenticular laminating machine as in claim 6, wherein a paper balance controller is located on one side of the front platform, the orientation panel of the paper on the controller conforms to the direction of travel of the paper.

8. The lenticular laminating machine as in claim 7, wherein a front and rear paper infrared controller is set on one end of the printing paper roller (3) to control the front and rear position of the paper by adjusting the lower laminating roller (2) and the printing paper roller (3) when the paper enters between the rollers.

9. The lenticular laminating machine as in claim 8, wherein an adjustment indicating device connects with the mucilage adjusting roller (6), the upper lenticular sheet roller (4) and the printing paper roller (3), the adjustment indicating device including a mucilage adjusting button, a lenticular sheet adjusting knob and a printing paper adjusting knob.

10. The lenticular laminating machine as in claim 7, 8 or 9, wherein a control box is set on the base of the machine, said box comprising a power switch, a printing paper length control display, a printing paper number display, a printing paper front and rear control display.
